Europäisches Patentamt

European Patent Office

Office européen des brevets

(19)

(11) **EP 1 132 133 A1**

(12) **DEMANDE DE BREVET EUROPEEN**

(43) Date de publication:
**12.09.2001 Bulletin 2001/37**

(51) Int Cl.[7]: **B01J 35/00**, B01J 35/06,
B01J 21/06, B01J 37/02,
B01J 19/12, B01J 19/24,
B01J 19/32, C02F 1/72,
C03C 25/42

(21) Numéro de dépôt: **01400547.4**

(22) Date de dépôt: **02.03.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **07.03.2000 FR 0002923**

(71) Demandeur: **NanoPoudres Technologies
75005 Paris (FR)**

(72) Inventeurs:
• **Bailleux, Christian
75019 Paris (FR)**
• **Benoit-Marquie, Florence
31500 Toulouse (FR)**

(54) **Réacteurs photocatalytiques à base de dioxyde de titane sur support silice pour le traitement de l'air et de l'eau**

(57) L'invention concerne plusieurs familles de réacteurs photocatalytiques à faible perte de charge à base de dioxyde de titane sur support de silice, où la lumière excitatrice ultraviolette transite totalement ou partiellement via le support de silice. Pour l'une de ces familles, on utilise les variations de la capacité d'adsorption du dioxyde de titane, en fonction de la température.

L'invention concerne également la réalisation des supports silice afin de les rendre aptes à conduire et diffuser la lumière ultraviolette sur de grandes distances, ainsi que la préparation d'un catalyseur dioxyde de titane de structure anatase, de grande surface développée, à forte capacité d'adsorption et facilement régénérable thermiquement, à partir d'un gel très stable dans le temps, obtenu à partir d'alcoxydes de titane.

FIG.1

EP 1 132 133 A1

**Description**

La présente invention concerne des supports de réaction pour le traitement d'un fluide sous l'action de la lumière. Elle concerne en outre des processus de fabrication de tels supports et du catalyseur déposé sur ces supports, ainsi que des réacteurs de traitement de fluide utilisant de tels supports de réaction.

Certains procédés actuels de traitement des liquides et des gaz, notamment en vue de leur épuration, mettent fréquemment en oeuvre des réactions chimiques provoquées par des rayonnements de type lumineux ou électromagnétique. Ces opérations ont lieu à la surface de catalyseurs supportés.

Ainsi par exemple, un support massif formé d'un bloc de verre massif est recouvert en surface d'un photocatalyseur. Une lampe émettant des ultraviolets est disposée en regard de cette surface. Le flux gazeux à traiter circule entre la lampe et le bloc de verre. Sous l'action du rayonnement ultraviolet, les molécules de gaz en contact avec la couche active de photocatalyseur sont l'objet de réactions chimiques lors de la circulation du gaz.

Le rendement, tant chimique qu'énergétique, de telles installations est faible en raison de l'insuffisance des contacts entre la veine fluide et le support réactionnel et d'un éclairage très partiel du photocatalyseur. L'invention a pour but de proposer une nouvelle famille de supports de réaction, une nouvelle technique de préparation du photocatalyseur et des réacteurs eux-mêmes, améliorant le rendement des procédés de traitement de fluide sous l'action de la lumière, tout en conservant une faible perte de charge lors du passage du fluide à travers le réacteur.

Le support de réaction est à base de silice en raison de ses propriétés optiques de non absorbance dans l'ultraviolet, ainsi que des propriétés mécaniques de ce matériau. Le domaine d'utilisation et la taille du réacteur conditionnent le choix de la qualité de la matière première.

L'invention a, en outre, pour objet les procédés de fabrication des différents types de support, à partir d'éléments disponibles du commerce, tels que toiles, aiguilletés, feutres, frittés,... Le choix du matériau de base est fait en fonction des caractéristiques demandées au réacteur, dont principalement l'efficacité et la perte de charge.

L'invention a aussi pour objet la réalisation de réacteurs aptes simultanément au traitement chimique des effluents, notamment de l'air et de l'eau, afin de permettre la minéralisation complète des composés organiques pré-sents en $CO_2$, $N_2O$, $N_2$, par photocatalyse, ainsi qu'au traitement bactéricide, air et eau de ces effluents.

Enfin, l'invention vient étendre et compléter le brevet "Support de réaction et réacteurs pour le traitement des composés chimiques solides et fluides sous l'action d'un phénomène ondulatoire", déposé le 1er juillet 1997 sous le numéro 97/08258, publié le 8 janvier 1999 sous le numéro 2765497.

L'un des points clés de l'invention correspondant à ce brevet consistait en la réalisation d'ensembles d'éléments de silice , en l'occurrence des billes de faibles dimensions (100 à 3000 μm) interconnectées optiquement par frittage. La lumière U.V. circule à l'intérieur de ces éléments qui se comportent comme des fibres optiques de mauvaise qualité . les défauts optiques du milieu, en particulier les zones de frittage favorisent la sortie des U.V. de la "fibre", vers le photocatalyseur $TiO_2$, supporté sur ladite fibre.

L'excitation du $TiO_2$ par la lumière U.V. transitant par le support de silice, est possible et prouvée scientifiquement. On peut consulter à ce sujet l'article "New reactor design for photocatalytic wastewater treatment with $TiO_2$ immobilized on fused silica glass fibers : photomineralization of 4-chlorophenol" de K. Hofstadler et Rupert Bauer - 577 Environmental Science and Technology - 28 (1994) April N°4 pages 670-674.

Selon la présente invention, l'excitation du photocatalyseur sera réalisée soit par le passage de la lumière via le support de silice, soit à la fois par le passage au travers de la silice et l'éclairage direct via le fluide à traiter.

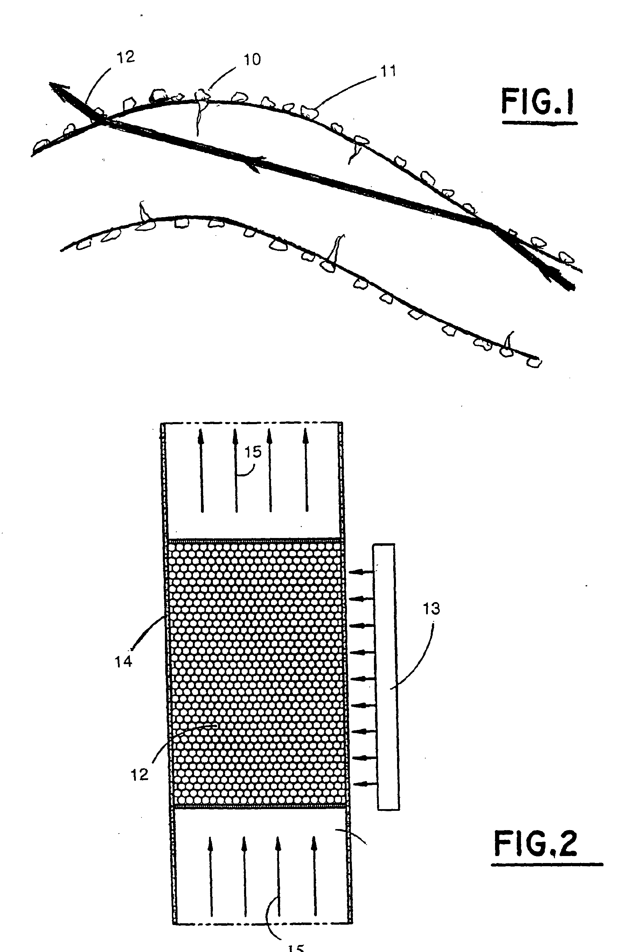

Une nouvelle famille de supports réactionnels à base de silice pure est réalisable en grandes dimensions en raison de la disponibilité récente de tissus, d'aiguilletés et de feutres de silice pure. Tous ces matériaux sont réalisés à partir de fils de silice, eux-mêmes constitués de brins continus de silice dont le diamètre varie entre 5 et 20 μm, et qui dans la plupart des cas a la valeur de 11 μm. Ces brins sont continus et sont, de ce fait, semblables à des fibres optiques figure 1.

Pour être mené à bien, l'ensemble des opérations de réalisation des fils et des tissages nécessite un ensimage des fibres et fils. De très nombreuses formules d'ensimage existent ; tous leurs composants sont des produits organiques qu'un traitement à l'air à une température supérieure ou égale à 800°C permet d'éliminer totalement. L'élimination de l'ensimage a pour inconvénient, du fait de la création de microfissures 10, de faire perdre au tissu sa souplesse et donc toute possibilité de modification ultérieure de la forme.

L'amélioration apportée par l'invention au traitement des fibres, fils et tissus consiste en la fixation sur les fils de silice de particules sous-microniques ou nanoparticules 11 par frittage en milieu air, dans le domaine de température 1200 - 1600°C.

Ces particules de silice sous-microniques sont disponibles commercialement. A titre d'exemple, la société Degussa en commercialise une gamme dont les références correspondent à leurs surfaces BET. Ainsi, la référence 200 correspond à une surface BET de 200 $m^2/g$, ce qui indique une taille de particules de l'ordre de 15 nanomètres.

L'intérêt de la fixation de ces particules sur les fils et fibres est triple. En premier lieu, elle renforce la solidité des fils en bloquant les microfissures 10 des fibres et fils. En second lieu, elle crée des pôles d'accrochage du photocatalyseur 11. Enfin, elle assure la sortie de la lumière transitant par l'intérieur de la fibre 12.

L'imprégnation des fils, fibres, tissus, feutres avec ces particules avant frittage peut être obtenue de plusieurs façons : soit par épandage des particules en poudre, soit par imprégnation à l'aide d'une barbotine réalisée à partir de ces particules, soit enfin, par synthèse directe de ces particules sur ces fibres par passage d'un flux gazeux de $SiCl_4$ et injection de vapeur d'eau.

L'invention a également pour objet une procédure d'élaboration du photocatalyseur. Le photocatalyseur retenu est le dioxyde de titane, $TiO_2$, sous la forme anatase.

La création d'une paire électron-trou par absorption d'un photon par ce catalyseur doté de propriétés semi-conductrices est à même de permettre la minéralisation des composés organiques présents dans l'air de deux façons :

- l'oxydation, par le trou généré, de la matière organique adsorbée,
- l'oxydation par l'oxygène de l'air, excité par fixation de l'électron libéré, de la matière organique non adsorbée. Cet oxygène excité est en outre doté de propriétés bactéricides.

Dans le cas de traitement en milieu aqueux, ce sont les radicaux OH générés qui jouent un rôle similaire à celui de l'oxygène excité.

La réalisation du dépôt catalytique de $TiO_2$ sur les fibres de silice, présentant des points d'accrochage, tels que définis plus haut, est réalisable de plusieurs façons, le brevet précédent, cité en référence, présentait les trois voies suivantes : barbotine, gel et chimique.

La mise en oeuvre de la voie gel, s'établit maintenant comme suit, après les améliorations qui lui ont été apportées.

La préparation du gel se fait en trois étapes, la complexation, puis l'hydrolyse et la condensation. L'hydrolyse a pour but d'engendrer la fonction réactive «Ti-OH» :

$$Ti(OR)_4 + H_2O \rightarrow HO\text{-}Ti(OR)_3 + ROH$$

La condensation conduit à la formation de la structure en trois dimensions par création d'oxygènes pontants :

$$(OR)_3Ti\text{-}OH + HO\text{-}Ti(OR)_3 \rightarrow (OR)_3Ti\text{-}OH + H_2O$$

ou

$$(OR)_3Ti\text{-}OR + HO\text{-}Ti(OR)_3 \rightarrow (OR)_3Ti\text{-}O\text{-}Ti(OR)_3 + ROH$$

La maîtrise de ces deux dernières étapes est essentielle et conditionne la viscosité du gel amorphe et la qualité du dépôt sur le support et donc la qualité du catalyseur.

L'intervention d'un agent de terminaison permet de bloquer les réactions de condensation et ainsi d'optimiser la structure et la morphologie du matériau final. De plus, les conditions opératoires mises au point évitent le vieillissement du gel et permettent ainsi un dépôt sur le support silice sans contraintes de temps.

Les conditions du traitement thermique qui permet d'obtenir la cristallisation du $TiO_2$ sont des étapes essentielles, car elles sont responsables de la qualité du catalyseur préparé et de son activité.

L'étape séchage mise au point, permet grâce au contrôle de la température et du temps de séchage d'augmenter la porosité du dépôt et conduit à une cristallisation du $TiO_2$ exclusivement sous forme anatase.

Le catalyseur obtenu présente une surface spécifique supérieure à celle de la poudre de $TiO_2$ classiquement utilisée, une structure mésoporeuse favorable aux réactions chimiques et à la fixation des bactéries, et une très grande résistance à l'attrition. Ces caractéristiques en font un catalyseur particulièrement efficace notamment pour la dégradation de polluants gazeux par photocatalyse.

Le gel est préparé sous atmosphère d'argon. Les précurseurs utilisés sont le titane IV tetra -n- butoxyde et le titane IV isopropoxyde.

A titre d'exemple non limitatif, on peut procéder de la façon suivante. Une quantité de 0,05 mole à 0,2 mole du précurseur est ajoutée à 0,5 à 2 moles d'éthanol absolu. Ce mélange est chauffé à reflux pendant 10 à 12 heures, puis refroidi à température ambiante. On obtient ainsi une solution jaune visqueuse et translucide. A cette solution 0,025 à 0,1 mole d'agent de terminaison et 0,05 à 0,2 mole d'eau sont ajoutés, l'ensemble est chauffé à reflux pendant 10 à 12 heures. Les agents de terminaison utilisés sont l'acétylacétone et/ou l'acide acétique. Un gel de $TiO_2$ amorphe et translucide est obtenu par évaporation de moins de la moitié du volume d'alcool ajouté au départ.

Ce gel peut se conserver plusieurs mois dans un récipient fermé et est utilisable à tout moment pour effectuer des dépôts de $TiO_2$ dont les qualités sont conservées.

Pour l'imprégnation du support silice, on procède de la façon suivante : le support est plongé dans le gel de façon à être entièrement recouvert. Le système est placé durant moins d'une heure dans une étuve à 100°C, afin d'éliminer une partie du solvant et de permettre ainsi au gel d'entamer son vieillissement. Les supports imprégnés de gel amorphe très visqueux sont placés dans une nacelle pour y subir un traitement thermique.

Le traitement thermique qui suit permet d'éliminer les résidus organiques et d'obtenir du $TiO_2$ cristallisé. Différentes sources de chaleur peuvent être utilisées, la configuration la meilleure consiste à utiliser un four tubulaire et à effectuer les rampes de température sous un balayage d'air.

Le traitement se compose de deux phases :

- d'abord une phase de séchage à 100°C durant 10 à 12 heures
- puis une phase permettant d'obtenir le forme cristalline anatase recherchée : la température finale de 450°C est maintenue entre 6 et 10 heures.

Ce traitement thermique pourra être utilisé à tout moment pour permettre la régénération des catalyseurs après leur utilisation en photocatalyse. Ceci permet de les employer plus d'une centaine de fois sans constater de désactivation.

Les trois exemples qui suivent, donnés à titre indicatif et non limitatif, permettent de mieux comprendre le processus de fabrication du gel mis en oeuvre et de préciser les caractéristiques du catalyseur ainsi obtenu.

Exemple 1 : dans un ballon contenant une atmosphère inerte d'argon, on ajoute 0,1 mole de butoxyde de titane IV à 1 mole d'éthanol absolu. Ce mélange est chauffé à reflux pendant 12 heures, sous agitation, puis refroidi à température ambiante. A cette solution sont ajoutés 0,04 mole d'acétylacétone, 0,01 mole d'acide acétique et 0,1 mole d'eau bidistillée. L'ensemble est chauffé à reflux pendant 10 heures. Les trois quarts du volume d'éthanol sont évaporés par distillation.

Les supports sont plongés dans le gel et placés dans une nacelle à 100°C. Les supports imprégnés sont retirés du gel et placés dans une nacelle à 100°C pendant 10 heures, puis à 450°C pendant 6 heures.

L'efficacité des catalyseurs est vérifiée en utilisant un test photochimique de notre conception qui consiste à dégrader l'acide 2,4 dihydroxybenzoïque en phase aqueuse. Les catalyseurs à base de $TiO_2$ obtenus sont actifs en photocatalyse et permettent de dégrader le polluant modèle. L'analyse radiocristallographique montre qu'ils sont entièrement formés de $TiO_2$ anatase. Le gel est un peu visqueux lors du dépôt sur le support et le surface spécifique des catalyseurs est d'environ 40 $m^2$/g.

Exemple 2 : dans un ballon contenant une atmosphère inerte d'argon, on ajoute 0,1 mole de butoxyde de titane IV à 1 mole d'éthanol absolu. Ce mélange est chauffé à reflux pendant 12 heures, sous agitation, puis refroidi à température ambiante. A cette solution est ajouté 0,08 mole d'acétylacétone et 0,1 mole d'eau bidistillée. L'ensemble est chauffé à reflux pendant 10 heures. Environ les deux tiers du volume d'éthanol sont évaporés par distillation.

Les supports sont plongés dans le gel et placés 15 minutes à 100°C. Les supports imprégnés sont retirés du gel et placés dans une nacelle à 100°C pendant 10 heures, puis à 450°C pendant 6 heures.

L'analyse radiocristallographique montre qu'ils sont entièrement formés de $TiO_2$ anatase. Le dépôt du gel se fait facilement et le catalyseur obtenu a une surface spécifique de 70 $m^2$/g.

Exemple 3 : dans un ballon contenant une atmosphère inerte d'argon, on ajoute 0,1 mole de butoxyde de titane IV à 1 mole d'éthanol absolu. Ce mélange est chauffé à reflux pendant 12 heures, sous agitation, puis refroidi à température ambiante. On ajoute, à cette solution, 0,05 mole d'acétylacétone et 0,1 mole d'eau bidistillée. L'ensemble est chauffé à reflux pendant 10 heures . Un tiers du volume d'éthanol est évaporé par distillation.

Les supports sont plongés dans le gel et placés 30 minutes à 100°C. Les supports imprégnés sont retirés du gel et placés dans une nacelle à 100°C pendant 10 heures, puis à 450°C pendant 6 heures. Entre les deux phases de traitement, les catalyseurs sont refroidis lentement jusqu'à 50°C.

L'analyse radiocristallographique montre qu'ils sont entièrement formés de $TiO_2$ anatase. Le dépôt du gel se fait facilement et le catalyseur obtenu a une surface spécifique de 90 $m^2$/g. Le gel ne vieillit pas, peut se conserver plusieurs mois dans un récipient fermé et peut être utilisé à tout moment pour effectuer des dépôts de quantités égales. De plus, les catalyseurs préparés résistent très bien à l'attrition.

L'invention porte, pour terminer, sur la conception et les techniques de réalisation de nouvelles familles de réacteurs.

Dans notre brevet "Support de réaction et réacteurs pour le traitement des composés chimiques solides et fluides sous l'action d'un phénomène ondulatoire", le réacteur photochimique figure 2 comportait un support photocatalyseur constitué de billes de silice de dimensions comprises entre 100 et 3000 µm, frittées entre elles 12. Ces empilements de billes, constituent de mauvaises fibres optiques permettant le transit de la lumière U.V. 13 sans atténuation de celle-ci, du fait de l'excellente transparence de la silice aux U.V. Les défauts géométriques et optiques, notamment au niveau des zones frittées liant deux billes l'une à l'autre, permettent une diffusion de la lumière U.V. dans l'ensemble du réacteur vers le TiO$_2$ support à travers ces mêmes billes frittées. Le glaçage de la périphérie du bloc de billes frittées 14 permet à la fois d'assurer la pénétration de la lumière U.V. dans les billes, sous incidence normale, et l'étanchéité latérale aux gaz à traiter.

L'existence d'une demande en réacteurs à faibles pertes de charge : typiquement quelques cm d'eau (ou centaines de Pascal) pour le passage d'air au travers du filtre à une vitesse de l'ordre du m/s, conduit à développer une nouvelle famille de réacteurs utilisant des tissus et des feutres de silice disponibles industriellement sur le marché.

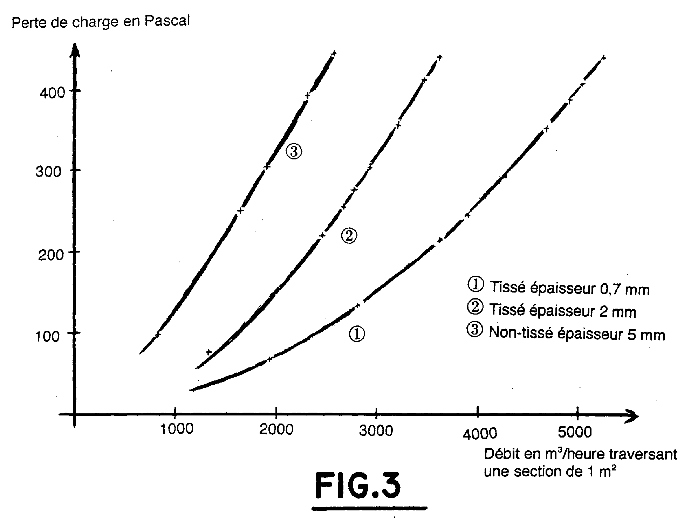

Ces tissus et feutres dont les pertes de charge aérauliques sont données à titre d'exemple non limitatif figure 3 peuvent être utilisés seuls figure 4 ou combinés . Les figures 5 et 6 donnent deux exemples de ces combinaisons tissus 16, feutre ou aiguilleté 17.

Pour ce type de combinaisons, les pertes de charge des ensemble utilisés sont sensiblement égales à la somme des pertes de charge des composants mesurés séparément.

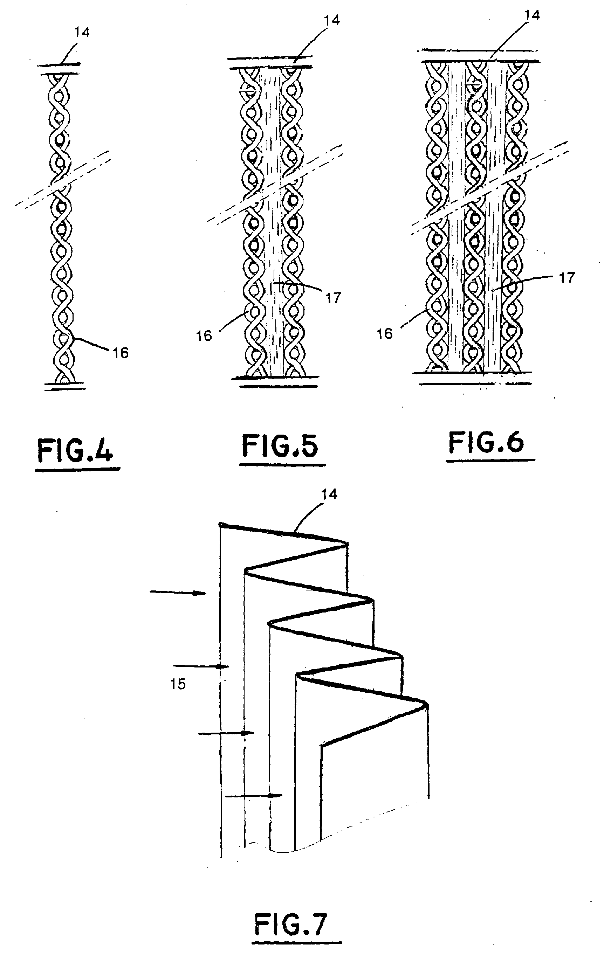

La réalisation de dispositifs à efficacité accrue, sans augmentation sensible de perte de charge, se fait par augmentation de la surface effective de filtration, telle que la structure plissée représentée figure 7.

La tenue mécanique de cette structure est obtenue grâce à un entretoisement réalisé avec des rubans ou des cordonnets de silice, disponibles également sur le marché. Le frittage décrit précédemment donne à l'ensemble après traitement une permanence de forme et en assure la solidité.

Les augmentations d'efficacité sont sensiblement proportionnelles à l'augmentation de la surface filtrante effective.

La continuité des brins de silice constituant les fils des tissus rend possible le transit de la lumière U.V. dans l'ensemble des tissus utilisés, et ceci sur de grandes distances, du fait de l'excellent transparence de la silice pure aux radiations U.V. Le glaçage 14, réalisé, soit avec un chalumeau à gaz, soit avec un chalumeau plasma, permet d'obtenir une interface optique plane de silice, qui facilite l'entrée de la lumière U.V. dans les fibres depuis les bords des filtres de façon similaire à celle réalisée par glaçage des structures billes de silice du précédent brevet.

Cette technique est la transposition directe de celle décrite dans le brevet référencé ci-dessus.

La lumière U.V. transitant dans les fibres est distribuée au photocatalyseur sur toute la longueur des fils des tissus, grâce aux micro- et nanograins de silice fixés par frittage et qui sont les points d'accrochage du TiO$_2$. Dans le cas de filtres minces constitués d'un seul tissu figure 4, ou d'un assemblage mince de tissus figures 5 et 6, une partie de la lumière émise par les lampes U.V. placées sur les bords des filtres excite directement le TiO$_2$ en traversant le fluide à traiter. Nous avons donc dans ce cas une activation du TiO$_2$ par la lumière U.V. transitant par les fibres et par la lumière transitant par le fluide à traiter. C'est également le cas pour les structures de type plissées, telles que la figure 7 les représente.

On peut également placer une ou deux lampes U.V. de façon classique en amont ou en aval du filtre. Dans ce cas, le support silice conserve l'avantage sur tous les autres types de support d'être totalement transparent aux U. V. La totalité de la lumière émise par les lampes est ainsi captée par le TiO$_2$.

Les fibres de silice constituant les feutres, les non-tissés, les aiguilletés 17, ... peuvent être relativement longues et atteindre 5 à 10 cm ; elles n'ont cependant pas la continuité des fils et fibres des tissés. L'obtention d'une distribution homogène de la lumière U.V. se fera en combinant tissés et non-tissés, tel que représenté, par exemple, figure 5 et figure 6. La lumière est distribuée à grande distance, telle que plusieurs décimètres, par les fibres des tissus. Elle est ensuite distribuée et utilisée localement au travers des fibres constituant des non-tissés.

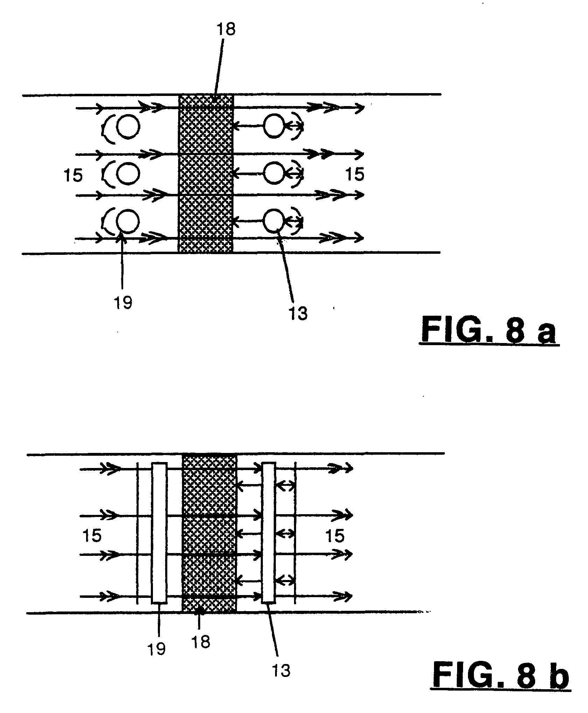

Une seconde famille de réacteurs utilise au mieux la forte capacité d'adsorption du catalyseur TiO$_2$, capable de fixer par adsorption des quantités de polluants organiques voisines de son propre poids. Un tel réacteur est représenté figures 8a et 8b.

La capacité d'adsorption du TiO$_2$ dépend de la température. Au voisinage de la température ambiante, elle diminue quand la température s'élève. Il est donc facile de provoquer, par simple chauffage, la désorption des produits adsorbés par le TiO$_2$ 18.

De nombreuses méthodes de chauffage sont susceptibles d'être utilisées. Nous citerons à titre d'exemple, sans que cela soit limitatif, le chauffage à l'aide d'émetteurs infra rouge 19, le chauffage par effet Joule, réalisé par insertion de fils mauvais conducteurs électriques.

Ce type de réacteurs est intéressant pour le traitement d'effluents gazeux fluctuant, ce qui est le cas dans la plupart des usages directement liés à l'activité humaine, avec un important dégagement de polluants dans la journée et pratiquement nul la nuit.

Le dimensionnement du réacteur se fait sur la capacité d'adsorption du filtre, et non pas sur la cinétique chimique de minéralisation.

Le chauffage partiel du filtre, et le déplacement des espèces adsorbées qui en résulte, permet une utilisation de la totalité du TiO$_2$ pour la destruction chimique des polluants, et ramène la valeur adsorbée à une valeur très faible, avant le début d'un nouveau cycle journalier de traitement.

La séparation adsorption - destruction peut également être mise en oeuvre en utilisant pour l'adsorption du charbon actif, qui est lui aussi sensible à la température.

La séparation adsorption - destruction peut également être mise en oeuvre dans des réacteurs plus classiques, quand à la distribution de la lumière vers le photocatalyseur. Dans le cas représenté figures 8a et 8b, les lampes U.V. 13 sont placées en aval du filtre, qu'elles éclairent donc directement. Les lampes IR 19 sont placées en amont du filtre. Elles permettent, pour leur part, l'échauffement progressif du filtre de l'amont vers l'aval.

## Revendications

1. Support de réaction pour le traitement d'un fluide sous l'action de la lumière, **caractérisé en ce qu'**il est constitué d'un ensemble tridimensionnel, diffusant et non absorbant, d'éléments interconnectés constitués essentiellement de silice, la structure de l'ensemble étant perméable pour la circulation du fluide à traiter au travers dudit ensemble.

2. Support selon la revendication 1, **caractérisé en ce que** ledit ensemble est constitué d'un tissu de silice maintenu plan ou plissé, dont les fibres ont été soudées entre elles par frittage.

3. Support selon la revendication 1, **caractérisé en ce que** ledit ensemble est constitué de fibres de silice non-tissées, interconnectées par frittage, selon un taux de vide contrôlé de 60 à 95%.

4. Support selon l'une quelconque des revendications précédentes, **caractérisé en ce que** ledit ensemble est glacé en regard des émetteurs lumineux, afin de faciliter l'entrée de la lumière dans la structure support.

5. Support selon l'une quelconque des revendications précédentes **caractérisé en ce qu'**il est revêtu par frittage de particules de silice de façon à améliorer l'accrochage d'un dépôt catalytique sur ce support.

6. Support selon la revendication 5 **caractérisé en ce que** le dépôt catalytique est un dépôt de dioxyde de titane sous forme anatase.

7. Support selon la revendication 5 **caractérisé en ce que** le dépôt de dioxyde de titane est obtenu par imprégnation du support avec un gel de dioxyde de titane préparé par complexation d'un alcoxyde de titane en tant que précurseur, hydrolyse et condensation du complexe puis traitement thermique du gel, qui conduit à une cristallisation du dioxyde de titane sous forme anatase.

8. Support selon la revendication 7 **caractérisé en ce que** l'alcoxyde de titane est le butoxyde de titane IV ou l'isopropoxyde de titane IV.

9. Gel de dioxyde de titane utilisé pour l'imprégnation du support et préparé selon la revendication 7 **caractérisé en ce qu'**il est stable dans le temps et peut être stocké sur de longues périodes.

10. Catalyseur supporté au moyen du support selon l'une quelconque des revendications 5 à 8 **caractérisé par** une forte surface BET, forte capacité d'adsorption et doté de propriétés bactéricides remarquables.

11. Utilisation de supports en tissu de silice selon la revendication 2 ou 4 pour la réalisation de photoréacteurs à très faibles pertes de charge sous un débit élevé de fluide.

12. Utilisation de supports de silice plissés selon l'une quelconque des revendications 5 à 8 et 10 pour l'obtention de photoréacteurs de très faible perte de charge sous un débit élevé de fluide.

13. Photoréacteurs utilisant le catalyseur au dioxyde de titane supporté par un support selon l'une quelconque des revendications 6 à 8 et 10 **caractérisé en ce que** leur dimensionnement dépend de la capacité d'adsorption du catalyseur utilisé et non de la cinétique chimique des réactions qui se produisent.

FIG.1

FIG.2

Perte de charge en Pascal

① Tissé épaisseur 0,7 mm
② Tissé épaisseur 2 mm
③ Non-tissé épaisseur 5 mm

Débit en m³/heure traversant
une section de 1 m²

# FIG.3

FIG.4

FIG.5

FIG.6

FIG.7

FIG. 8 a

FIG. 8 b

Office européen
des brevets

**RAPPORT DE RECHERCHE EUROPEENNE**

Numéro de la demande

EP 01 40 0547

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 888 814 A (PREMIS TECHNOLOGIES) 7 janvier 1999 (1999-01-07) | 1,4,9,11 | B01J35/00 B01J35/06 |
| A | * abrégé * | 5-8,10, 12,13 | B01J21/06 B01J37/02 |
| | * colonne 5, ligne 3 - ligne 31 * * colonne 5, ligne 50 - ligne 58 * * colonne 7, ligne 40 - ligne 46; revendications 1,2,7,9,10,13,14 * | | B01J19/12 B01J19/24 B01J19/32 |
| D,X | & FR 2 765 497 A 8 janvier 1999 (1999-01-08) --- | | C02F1/72 C03C25/42 |
| X | EP 0 823 280 A (HOYA CORP) 11 février 1998 (1998-02-11) * abrégé * * colonne 13, ligne 15 - ligne 34 * * colonne 15, ligne 55 - colonne 16, ligne 8 * * colonne 26, ligne 39 - ligne 50 * * colonne 32, ligne 15 - colonne 33, ligne 35 * | 1,5-10, 12,13 | |
| | * colonne 36, ligne 50 - colonne 37, ligne 5 * * colonne 39, ligne 1 - ligne 14 * --- | | **DOMAINES TECHNIQUES RECHERCHES** (Int.Cl.7) B01J C03C |
| X | DE 28 38 476 A (HOELTER HEINZ) 20 mars 1980 (1980-03-20) * le document en entier * --- | 1,5,10 | C02F |
| X | US 5 564 065 A (FLECK MICHAEL ET AL) 8 octobre 1996 (1996-10-08) | 1-3,11 | |
| A | * colonne 2, ligne 12 - ligne 27 * * colonne 2, ligne 54 - ligne 63 * --- | 13 | |
| | -/-- | | |

Le présent rapport a été établi pour toutes les revendications

| Lieu de la recherche | Date d'achèvement de la recherche | Examinateur |
|---|---|---|
| LA HAYE | 7 juin 2001 | Veefkind, V |

EPO FORM 1503 03.82 (P04C02)

**Office européen
des brevets**

Numéro de la demande

EP 01 40 0547

---

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

---

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☒ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

**Office européen**
**des brevets**

## RAPPORT DE RECHERCHE EUROPEENNE

Numéro de la demande

EP 01 40 0547

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | HOFSTADLER K ET AL: "NEW REACTOR DESIGN FOR PHOTOCATALYTIC WASTEWATER TREATMENT WITH TIO2 IMMOBILIZED ON FUCED-SILICA GLASS FIBERS: PHOTOMINERALIZATION OF 4-CHLOROPHENOL" ENVIRONMENTAL SCIENCE AND TECHNOLOGY,US,AMERICAN CHEMICAL SOCIETY. EASTON, PA, vol. 28, no. 4, 1 avril 1994 (1994-04-01), pages 670-674, XP000432950 ISSN: 0013-936X | 1,4,11 | |
| A | * page 671 * | 6-8,10, 12,13 | |
| | --- | | |
| X | EP 0 870 530 A (NIPPON SHEET GLASS CO LTD ;NGS TECHNO RESEARCH CO LTD (JP)) 14 octobre 1998 (1998-10-14) | 1,3,9 | |
| A | * abrégé * * page 8, ligne 54 - page 10, ligne 57 * | 5-8,10 | |
| | --- | | |
| X | PATENT ABSTRACTS OF JAPAN vol. 016, no. 362 (C-0971), 5 août 1992 (1992-08-05) & JP 04 114934 A (BABCOCK HITACHI KK), 15 avril 1992 (1992-04-15) * abrégé * | 1,2,5 | DOMAINES TECHNIQUES RECHERCHES (Int.Cl.7) |
| | --- | | |
| Y | EP 0 866 101 A (NIPPON SODA CO) 23 septembre 1998 (1998-09-23) * page 1, ligne 32 - ligne 35 * | 1,5-8, 10,12,13 | |
| | --- | | |
| Y | PATENT ABSTRACTS OF JAPAN vol. 018, no. 118 (C-1172), 25 février 1994 (1994-02-25) & JP 05 309267 A (JAPAN STORAGE BATTERY CO LTD), 22 novembre 1993 (1993-11-22) * abrégé * | 1,5-8, 10,12,13 | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 7 juin 2001 | Veefkind, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen
des brevets**

**ABSENCE D'UNITÉ D'INVENTION
FEUILLE SUPPLÉMENTAIRE B**

Numéro de la demande

EP 01 40 0547

La division de la recherche estime que la présente demande de brevet européen ne satisfait pas à l'exigence relative à l'unité d'invention et concerne plusieurs inventions ou pluralités d'inventions, à savoir :

1. revendications: 1-8,10-12

   Support, constitué d'un ensemble tridimensionel, diffusant et non-absorbant, d'éléments interconnectés constituées essentiellement de silice. Catalyseur supporté au moyen du support selon l'une quelconque des revendications 5 à 8. Utilisation de supports.

2. revendication : 9

   Gel de dioxyde de titane

3. revendication : 13

   Photoreacteur

EPO FORM P0402

**Office européen des brevets**

**RAPPORT DE RECHERCHE EUROPEENNE**

Numéro de la demande

EP 01 40 0547

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| P,X | WO 00 76660 A (PPG IND OHIO INC) 21 décembre 2000 (2000-12-21) * revendications 1-43; figures 1-3A * ----- | 1-13 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 7 juin 2001 | Veefkind, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 0547

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-06-2001

| Document brevet cité au rapport de recherche | | Date de publication | Membre(s) de la famille de brevet(s) | | Date de publication |
|---|---|---|---|---|---|
| EP 0888814 | A | 07-01-1999 | FR | 2765497 A | 08-01-1999 |
| EP 0823280 | A | 11-02-1998 | JP | 9225262 A | 02-09-1997 |
| | | | JP | 10071312 A | 17-03-1998 |
| | | | JP | 10072234 A | 17-03-1998 |
| | | | JP | 10118415 A | 12-05-1998 |
| | | | JP | 10141044 A | 26-05-1998 |
| | | | CN | 1185756 A | 24-06-1998 |
| | | | WO | 9731703 A | 04-09-1997 |
| | | | JP | 10274713 A | 13-10-1998 |
| DE 2838476 | A | 20-03-1980 | ES | 478725 A | 01-07-1979 |
| | | | FR | 2419750 A | 12-10-1979 |
| | | | GB | 2016432 A,B | 26-09-1979 |
| | | | JP | 54129572 A | 08-10-1979 |
| | | | US | 4295868 A | 20-10-1981 |
| US 5564065 | A | 08-10-1996 | AUCUN | | |
| EP 0870530 | A | 14-10-1998 | US | 6074981 A | 13-06-2000 |
| | | | WO | 9805413 A | 12-02-1998 |
| | | | US | 6194346 B | 27-02-2001 |
| | | | JP | 10146530 A | 02-06-1998 |
| JP 04114934 | A | 15-04-1992 | AUCUN | | |
| EP 0866101 | A | 23-09-1998 | WO | 9815600 A | 16-04-1998 |
| JP 05309267 | A | 22-11-1993 | AUCUN | | |
| WO 0076660 | A | 21-12-2000 | AUCUN | | |

EPO FORM P0460

Pour tout renseignement concernant cette annexe : voir Journal Officiel de l'Office européen des brevets, No.12/82